# EUROPEAN PATENT APPLICATION

(11) **EP 4 827 230 A1**
(43) Date of publication of application: **21.10.2026**
(21) Application number: 23962692.2
(22) Date of filing: 28.12.2023
(51) Int. Cl.: H04W 76/14

(54) **POINT-TO-POINT COMMUNICATION METHOD BASED ON UWB TECHNOLOGY, AND ELECTRONIC DEVICE AND STORAGE MEDIUM**

(71) Applicant: Questyle Audio Technology Co., Ltd, Shenzhen, Guangdong 518000 (CN)
(72) Inventor: WANG, Fengshuo, Shenzhen, Guangdong 518000 (CN)
(74) Representative: Plavsa, Olga
(86) International application number: PCT/CN2023/142835
(87) International publication number: WO 2025/138011

(57) **Abstract**

This invention provides a point-to-point communication method based on UWB technology, an electronic device and a storage medium. The method comprises: searching for a plurality of slave devices and establishing connections therewith via an internal UWB protocol; determining core pulse directions of UWB antennas of the master device and attributes of established slave devices based on the internal UWB protocol, wherein the UWB antennas have different orientations, and a pulse signal of each UWB antenna exhibits maximum strength along its core pulse direction; determining target devices based on one or more parameters selected from the group consisting of: the core pulse directions of the UWB antennas, the attributes of the established slave devices, and user input; establishing UWB-based interaction with the target devices. This invention can realize point-to-point communication with high bandwidth, low latency, strong anti-interference performance and low power consumption, and improves the data transmission rate.

## Description

### TECHNICAL FIELD

This invention pertains to the field of data transmission technologies, and more particularly to a point-to-point communication method based on Ultra-Wideband (UWB) technology, an electronic device, and a storage medium.

### BACKGROUND

With the development of wireless communication technologies, current device-to-device communication (also referred to as communication between devices, such as between computers, between phones, or between phones and computers) can achieve wireless point-to-point communication via near-field communication technologies such as a local area network (LAN) and Bluetooth, which is also referred to as inter-device communication. Wireless point-to-point communication allows people to experience the convenience of wireless communication, but it can also lead to certain inconveniences. For example, point-to-point communication based on Bluetooth technology has relatively low data rates; point-to-point communication based on WiFi technology can only be realized within a WiFi-covered environment and suffers from narrow bandwidth, high latency, poor anti-interference performance, and high power consumption.

### SUMMARY

In view of the disclosure, this invention provides a point-to-point communication method based on UWB technology, an electronic device and a storage medium based on UWB technology to improve point-to-point communication by resolving drawbacks such as insufficient bandwidth, prolonged latency, inferior anti-interference performance, excessive power consumption, and consequent low data transmission rate.

This invention provides a point-to-point communication method based on UWB technology, comprising:
A master device searching for a plurality of slave devices and establishing connections with the slave devices via an internal UWB protocol;
The master device determining respective core pulse directions of configured UWB antennas of the master device and attributes of the slave devices based on the internal UWB protocol, wherein the UWB antennas have different orientations, and a pulse signal of each UWB antenna exhibits maximum strength along its core pulse direction;
The master device determining target devices from the slave devices based on one or more parameters selected from the group consisting of: the core pulse directions of the UWB antennas, the attributes of the slave devices, and user input; and
The master device establishing UWB-based interaction with the target devices.

The master device identifying a type of each slave device;
The master device obtains distances between the master device and each slave device; and
The master device obtains the slave devices with distances to the master device falling within thresholds respectively corresponding to the types, and establishes connections with the slave devices, wherein the slave devices of a same type have an identical threshold, and the slave devices of different types have distinct thresholds.

Optionally, the master device searching for the plurality of slave devices and establishing the connections with the slave devices via the internal UWB protocol comprises:
The master device identifying the types of the plurality of slave devices and establishing connections with one or more slave devices of a predetermined type; and/or
The master device obtaining identifiers of the plurality of slave devices and establishing connections with one or more slave devices having a predetermined identifier.

Optionally, the method further comprises: visually displaying respective relative positions of the plurality of slave devices with respect to the master device and whether a connection is established between each slave device and the master device.

Optionally, the user input comprises selecting a media file to be interacted with, dragging the media file onto the icon of one slave device and then releasing the media file, wherein the slave device on whose icon the media file is dragged and released is defined as the target device.

Optionally, the master device determining respective core pulse directions of configured UWB antennas of the master device comprises:
Determining a reference plane associated with each UWB antenna;
Obtaining a pulsed-wave radiation pattern of each UWB antenna on the corresponding reference plane;
Dividing the pulsed-wave radiation pattern into a plurality of sectors arranged in an array, and obtaining signal strength differences between each sector and adjacent sectors in a plurality of directions;
Accumulating the signal strength differences of all sectors in the pulsed-wave radiation pattern in the plurality of directions;
Assigning respective weighting coefficients to angles corresponding to the plurality of directions according to an accumulated sum of the signal strength differences in the plurality of directions; and
Calculating a sum of products between the angles corresponding to respective directions and corresponding weighting coefficients as the core pulse direction.

Optionally, the plurality of directions comprise a horizontal direction, a vertical direction, and two bisecting directions between the horizontal and vertical directions.

Optionally, the reference plane is one or more planes selected from the group consisting of:
A plane where a radiating element of the UWB antenna is disposed; and
A plane passing through a center of the master device and a center of the UWB antenna.

This invention further provides an electronic device comprising a memory and a processor. The memory is configured to store a communication program. The processor is configured to execute the communication program to perform any one of the point-to-point communication methods based on UWB technology as described above.

This invention further provides a storage medium storing a computer program. The computer program is executed by a processor to perform any one of the point-to-point communication methods based on UWB technology as described above.

As described above, this invention performs point-to-point communication based on UWB technology. Featuring ultra-wide bandwidth, low latency, strong anti-interference performance and low power consumption, UWB technology enables point-to-point communication with high bandwidth, low latency, strong anti-interference performance and low power consumption, and improves data transmission rate. In addition, this invention determines the core pulse direction of each UWB antenna according to the internal UWB protocol. Each UWB antenna generates the strongest pulse signals along its core pulse direction. When selecting the target device based on the core pulse direction, the slave device having the strongest pulse signal relative to the master device is selected as the target device, which further improves the data transmission rate.

### BRIEF DESCRIPTION OF THE DRAWINGS

FIG. 1 is a schematic flowchart illustrating a point-to-point communication method based on UWB technology according to an embodiment of this invention;
FIG. 2 is a schematic diagram illustrating slave devices discovered by a master device, relative spatial positions between each slave device and the master device, and a connection relationship between each slave device and the master device;
FIG. 3 is a schematic diagram illustrating a partitioning of a pulsed-wave radiation pattern into a plurality of sectors according to this invention;
FIG. 4 is a schematic diagram illustrating a UWB antenna of a master device determining target devices according to this invention.
FIG. 5 illustrates another schematic diagram illustrating the UWB antenna of a master device determining target devices according to this invention.

### DETAILED DESCRIPTION OF THE EMBODIMENTS

To solve the problems existing in the prior art, this invention provides a point-to-point communication method based on UWB technology, an electronic device and a storage medium. These claimed subject matters share the same inventive concept and adopt substantially identical or similar technical principles for solving the problems. The embodiments of each claimed subject matter may be cross-referenced, and repetitive descriptions are therefore omitted.

To clarify the objectives, technical solutions and advantages of this invention, the following description sets forth the technical solutions in detail with reference to specific embodiments and accompanying drawings. It will be understood that the embodiments described below are only some, rather than all, embodiments of this invention. In the absence of conflicts, the respective embodiments and their technical features may be combined, and the combinations are embraced by the technical solutions herein.

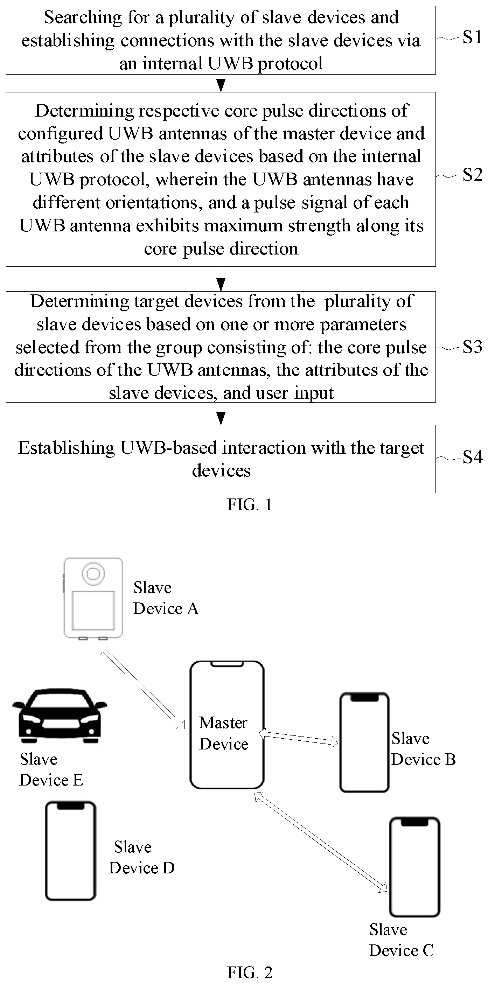

FIG. 1 illustrates a point-to-point communication method based on UWB technology according to an embodiment of this invention. In certain portions of this description, the point-to-point communication method based on UWB technology may be abbreviated as the "point-to-point communication method" or the "method". Applicable scenarios of this invention include, but are not limited to, point-to-point communication scenarios and Internet-of-Things (IoT). Taking the IoT as an example, in an IoT system consisting of a plurality of devices, the number of constituent devices is adaptively determined according to practical requirements. Communications between devices are implemented via UWB technology and include both one-to-one and one-to-many communication modes, and either mode inherently includes a point-to-point communication mode.

During different service executions, a device may switch its role, e.g., the device may serve as either a master or a slave device. The so-called master device refers to a device responsible for scheduling and management in a certain service and determines which slave devices participate in the current service. Correspondingly, the slave device is a device whose data is scheduled and managed in the current communication and transmission service. These master devices may scan to search for slave devices to perform methods including an exemplary scheme shown in FIG. 1.

The point-to-point communication method of this invention may be performed by any device within an IoT system (referred to as a master device in this instance). The device may take any one of the following forms, without limitation: a smartphone or other intelligent terminal; an in-vehicle infotainment system (IVI); or a communication apparatus or module with UWB function.

Referring to FIG. 1, the point-to-point communication method comprises at least steps S1-S4 as follows.

S1: a master device searches for a plurality of slave devices and establishes connections with the slave devices via an internal UWB protocol.

In one exemplary embodiment, the master device automatically establishes connections with discovered slave devices, or automatically transmits a connection request thereto (or transmits a request in response to user operation on the master device). A connection is established upon receipt of an affirmative connection acknowledgment (ACK) from the slave device; no connection is established if no affirmative connection ACK is received or a connection-reject negative acknowledgment (NACK) is sent from the slave device.

In another exemplary embodiment, the master device first identifies types of the plurality of slave devices and the master device obtains distances between the master device and each slave device. The master device further determines which slave device to establish a connection with based on the distances between the master and respective slave devices and the device type of each slave device.

For example, a relationship between each device type and a distance threshold may be predetermined, wherein slave devices of a same device type have an identical threshold, and slave devices of different types have distinct distance thresholds. The master device then obtains the slave devices with distances to the master device falling within thresholds respectively corresponding to the types based on the relationship, and establishes connections therewith. Take slave device A of a first device type and slave device B of a second device type that have been discovered as an example. A first distance exists between the master and the slave A, and a second distance exists between the master and the slave B. The master does not establish a connection with the slave A when the first distance exceeds the first threshold corresponding to the first device type, whereas the master establishes a connection with the slave B if the second distance is less than or equal to the second threshold corresponding to the second device type.

In a further exemplary embodiment, the master device identifies the type of each of the plurality of slave devices and establishes connections with slave devices of a predetermined type. For example, a smartphone (serving as the master device) may discover slave devices including other smartphones and vehicles, but establish connections only with the vehicles.

In still another exemplary embodiment, the master device obtains an identifier of each slave device and establishes a connection with a slave device having a predetermined identifier. For example, a smartphone (i.e., the master device) may discover multiple slave devices including a smartphone, a smartphone, a vehicle, a vehicle, and the like, but establishes a connection exclusively with the vehicle with the predetermined identifier. The predetermined identifier may be a unique identification assigned to the slave device and pre-stored in the master device. For example, a user's vehicle may be bound in advance to the user's smartphone such that the predetermined identifier is saved on the smartphone. When the smartphone serving as the master device discovers the vehicle, a connection is automatically established therewith upon confirming that the vehicle's identifier matches the stored predetermined identifier, while the master refrains from connecting with other vehicles present in the parking surroundings.

The slave devices referenced in steps S2-S4 are those that establish connections with the master device.

It should be understood that the master device may select slave devices for connection establishment via other approaches, and the approaches are merely exemplary. Two or more approaches may be combined where no conflict exists to select slave devices for connection. For example, the master device selects slave devices and establishes connections therewith according to the type and identifier of each slave device. In specific scenarios, a vehicle 3 provided with a predetermined identifier among vehicles may be selected for connection, while no connection is established to a vehicle 4. Alternatively, when a smartphone (i.e., the master device) discovers multiple slave devices including a smartphone 1, a smartphone 2, the vehicle 3 and a vehicle 4, the smartphone 1 and the vehicle 3 having the predetermined identifier are selected to establish connections, and no connections are established to the smartphone 2 and the vehicle 4.

Since UWB technology enables positioning, optionally, the method further comprises: displaying the relative position of each slave device with respect to the master device and respective connection status of each slave device on the master device. For example, in the scenario depicted in FIG. 2, icons for the master device and a plurality of currently discovered slave devices (namely a slave device A, a slave device B, a slave device C, a slave device D, and a slave device E) may be displayed on a screen of the master device. A double-headed arrow drawn between two devices indicates that a connection has been established between the two devices; absence of the double-headed arrow indicates that the corresponding slave device is discovered by the master device but no connection is formed therebetween. The specific display form of each icon is determined according to the type of the slave device obtained by the master device via an internal UWB protocol. For example, where the slave device A is a loudspeaker, an icon corresponding to the loudspeaker is displayed; where the slave device E is a vehicle of a specific brand, an icon corresponding to the vehicle of such brand is displayed; and where the slave device B, the slave device C and the slave device D are smartphones of another specific brand, icons corresponding to the brand's smartphones are displayed. Accordingly, a user may intuitively obtain information such as the type of each slave device from the master device.

In other embodiments, the master device may display only icons of slave devices currently connected thereto as well as their relative positions with respect to the master device.

Based on posture information of the master device, the master device may dynamically adjust the displayed posture of its own icon in real time, enabling a user to intuitively acquire relevant information.

S2: the master device determines respective core pulse directions of configured UWB antennas of the master device and attributes of established slave devices based on the internal UWB protocol, wherein the UWB antennas have different orientations, and a pulse signal of each UWB antenna exhibits maximum strength along its core pulse direction.

In addition to implementing the various embodiments described in the step S1, the internal UWB protocol of this invention may further determine core pulse directions of the respective UWB antennas of the master device and attributes of each slave device, though not limited thereto. Optionally, the attribute indicates whether the corresponding slave device is a storage device or an audio device.

The approach for obtaining the attributes of each slave device is known from prior art and will not be elaborated herein.

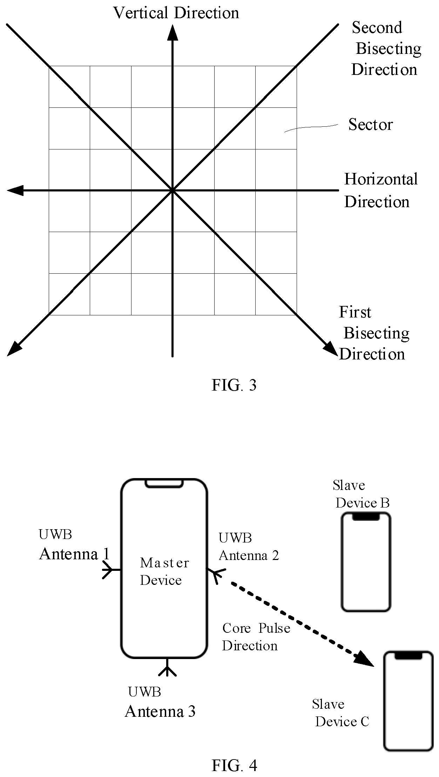

Because UWB technology performs data transmission based on short pulse signals whose propagation strength varies with different directions, in one embodiment, the manner in which the master device determines the core pulse direction of each UWB antenna mounted thereon may include:
First, a reference plane for each UWB antenna is determined. The reference plane is one or more planes selected from the group consisting of: a plane where the radiating element of the UWB antenna is disposed, a plane parallel to the plane of the radiating element, and a plane passing through a center of the master device and a center of the UWB antenna. Taking the scenario illustrated in FIG. 4 as an example, with respect to a UWB antenna 2, the plane passing through the center of the master device and the center of the UWB antenna 2 serves as the reference plane of the UWB antenna 2. The core pulse direction corresponding to each UWB antenna varies with a change in the orientation of the master device. Subsequently, a pulsed-wave radiation pattern of each UWB antenna on the corresponding reference plane is obtained. For example, the pulsed-wave radiation pattern of a corresponding type of UWB antenna under practical environmental conditions can be obtained through simulation testing. The simulation testing yields a three-dimensional pulse radiation pattern, and the pulse propagation direction on the reference plane is extracted to form the corresponding pulsed-wave radiation pattern. Next, the pulsed-wave radiation pattern is divided into a plurality of sectors arranged in an array such as rectangular regions shown in FIG. 3, and a signal strength difference between each sector and adjacent sectors along a plurality of directions is obtained. The signal strength differences of all sectors of the pulsed-wave radiation pattern along the plurality of directions are summed to obtain a cumulative value. Weight coefficients are then assigned to respective angles corresponding to the plurality of directions according to the cumulative value of the signal strength differences. Finally, a sum of products between each angle and corresponding weight coefficient is taken as the core pulse direction.

Referring to FIG. 3, for example, the pulsed-wave radiation pattern of a single UWB antenna is rectangular, and the plurality of directions include a horizontal direction, a vertical direction, and two bisecting directions between the horizontal and vertical directions (referred to as the first bisecting direction and the second bisecting direction, respectively). M1 is the cumulative sum of signal strength differences in the horizontal direction, M2 is the cumulative sum in the vertical direction, M3 is the cumulative sum in the first bisecting direction, and M4 is the cumulative sum in the second bisecting direction. Weight coefficients k1, k2, k3 and k4 are calculated according to the proportional relationship among M1, M2, M3 and M4, wherein k1+k2+k3+k4=1. S indicates the sum of products of the respective angles corresponding to the horizontal direction, the vertical direction, the first bisector direction, and the second bisector direction and their respective weight coefficients, which satisfies the formula: S=k1·S1+k2·S2+k3·S3+k4·S4, where S is defined as the core pulse direction, and S1, S2, S3 and S4 indicate the angles corresponding to the horizontal direction, the vertical direction, the first bisecting direction and the second bisecting direction respectively. For example, S1 may be 180°, S2 may be 90°, S3 may be 45°, and S4 may be 135°.

S3: the master device determines target devices from the established slave devices based on one or more parameters selected from the group consisting of: the core pulse directions of the UWB antennas, the attributes of the established slave devices, and user input.

In one embodiment, the master device may determine slave devices positioned along the core pulse direction of each UWB antenna as target devices. As shown in FIG. 4, the master device is provided with three UWB antennas, namely UWB antennas 1, 2, 3 disposed at a left side, a right side and a bottom side of the master device respectively. For the UWB antenna 2, the slave device C lying in the corresponding pulse direction is determined as the target device. By contrast, although the slave device B is also arranged on the right side of the master device along with the UWB antenna 2 and is closest to the UWB antenna 2, the slave device B is not determined as the target device.

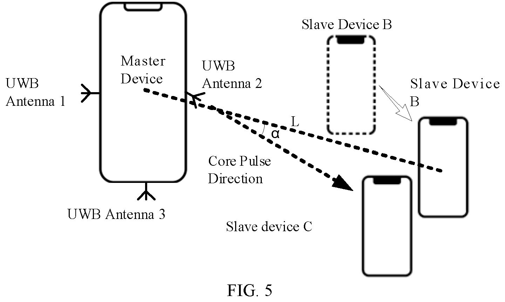

In another embodiment, slave devices whose angle relative to the core pulse direction of each UWB antenna fall within a predetermined threshold are selected and determined as target devices. Taking the UWB antenna 2 shown in FIG. 5 as an example, the slave device B is moved from the position shown in FIG. 4 to the position shown in FIG. 5, wherein a solid icon of the slave device B indicates its position after movement, and a dashed icon indicates its position before movement. The so-called angle may be defined as either of the following: an angle α between a connecting line L passing through the centers of the master device and the slave device B and the core pulse direction of the UWB antenna 2. Alternatively, the angle may be defined as the angle between the core pulse direction of the UWB antenna 2 and a connecting line between the two closest UWB antennas of the master device and the slave device B. For example, the connecting line between the UWB antenna 2 and the UWB antenna 0 (not shown) of the slave device B is shown in FIG. 5.

The master device may determine target devices from the plurality of slave devices according to attributes of respective slave devices. Optionally, this includes selecting corresponding slave devices as target devices based on a data type to be transmitted. For example, when audio media files need to be transmitted, audio devices are selected as the target devices.

In a scenario where the master device determines a target device from multiple slave devices according to a user operation, the user operation may be specifically implemented as follows: selecting a media file to be interacted with, dragging it to the icon of a slave device and then releasing it. The slave device on which the media file is dragged and released is defined as the target device. In this case, this invention can determine both the target device and the transmission of the media file via a single user operation.

S4: the master device establishes UWB-based interaction with the target devices.

The UWB interaction includes, but is not limited to, a smartphone pushing audio or transmitting control commands to the master control device, such as a vehicle, and providing publish-subscribe services between two devices.

As described above, this invention implements the point-to-point communication method based on UWB technology. UWB technology features low system complexity, low power spectral density of transmitted signals, insensitivity to channel fading, low interception probability, and high positioning accuracy, and is particularly suitable for high-speed wireless access in dense multipath scenarios such as indoor environments. Accordingly, the method provided in this invention and devices connected based on the method are capable of realizing point-to-point communication with high bandwidth, low latency, strong anti-interference performance and low power consumption, so as to improve data transmission rate.

In addition, this invention determines information required for the steps S1 to S4 based on the internal UWB protocol, particularly the core pulse direction of each UWB antenna. The pulse signal of any UWB antenna reaches maximum strength along its core pulse direction. When selecting a target device according to the core pulse direction, a slave device delivering the strongest pulse signal relative to the master device may be selected as the target device to further improve data transmission rate.

Embodiments of this invention further provide an electronic device including a memory and a processor. The memory stores a communication program, and is executed by the processor. The communication program implements the steps of the point-to-point communication method based on UWB technology described in any of the above embodiments. The electronic device can function as either a master device or a slave device, and the specific form of the electronic device is not limited herein.

This invention further provides a storage medium configured to store computer program, the computer program is executed by a processor to perform the steps of any one of the above point-to-point communication methods based on UWB technology.

The storage medium may include, but is not limited to read-only memory (ROM), random-access memory (RAM), magnetic disk drives, or optical disks.

Instructions stored in the storage medium can implement any one of the point-to-point communication methods based on UWB technology disclosed in the embodiments provided in this invention. Accordingly, all beneficial effects achievable by any point-to-point communication method based on UWB technology provided in the embodiments of this invention can be realized. Reference may be made to the preceding embodiments for details, which will not be repeated herein.

The above disclosure is merely partial embodiments of this invention and are not intended to limit the patent scope thereof. Any equivalent structural modification made by those skilled in the art from the specification and accompanying drawings shall fall within the scope of patent protection of this invention.

The step designations such as "S1", "S2" are adopted herein for concise and clear description of corresponding contents and do not impose substantial limitations on implementation sequence. Those skilled in the art may perform S2 prior to S1 in actual practice, and all the modifications are intended to be encompassed within the scope of protection of this invention.

Although terms such as "first," "second," are adopted to describe various types of information and the information shall not be limited to these terms. These terms are merely used to distinguish the information of the same type from one another. In addition, singular articles "a", "an" and "the" are intended to encompass plural forms as well. The term "or" and the phrase "and/or" shall be construed inclusively to signify any one or combination thereof. Exceptions to this definition apply only when combinations of elements, functions, steps or operations are inherently mutually exclusive in nature.

## Claims

1. A point-to-point communication method based on UWB technology, comprising:
a master device searching for a plurality of slave devices and establishing connections with the slave devices via an internal UWB protocol;
the master device determining respective core pulse directions of configured UWB antennas of the master device and attributes of the slave devices based on the internal UWB protocol, wherein the UWB antennas have different orientations, and a pulse signal of each UWB antenna exhibits maximum strength along its core pulse direction;
the master device determining target devices from the plurality of slave devices based on one or more parameters selected from the group consisting of: the core pulse directions of the UWB antennas, the attributes of the slave devices, and user input; and
the master device establishing UWB-based interaction with the target devices.

2. The method according to claim 1, wherein the master device searching for the plurality of slave devices and establishing the connections with the slave devices via the internal UWB protocol comprises:
the master device identifying types of the plurality of slave devices;
the master device obtaining distances between the master device and each slave device; and
the master device obtaining the slave devices with distances to the master device falling within thresholds respectively corresponding to the types, and establishing connections with the slave devices, wherein the slave devices of a same type have an identical threshold, and the slave devices of different types have distinct thresholds.

3. The method according to claim 1, wherein the master device searching for the plurality of slave devices and establishing the connections with the slave devices via the internal UWB protocol comprises:
the master device identifying the types of the plurality of slave devices and establishing connections with one or more slave devices of a predetermined type; and/or
the master device obtaining identifiers of the plurality of slave devices and establishing connections with one or more slave devices having a predetermined identifier.

4. The method according to any one of claims 1-3, further comprising: visually displaying respective relative positions of the plurality of slave devices with respect to the master device and whether a connection is established between each slave device and the master device.

5. The method according to claim 4, wherein the user input comprises selecting a media file to be interacted with, dragging the media file onto the icon of one slave device and then releasing the media file, wherein the slave device on whose icon the media file is dragged and released is defined as the target device.

6. The method according to claim 1, wherein the master device determining respective core pulse directions of configured UWB antennas of the master device comprises:
determining a reference plane associated with each UWB antenna;
obtaining a pulsed-wave radiation pattern of each UWB antenna on the corresponding reference plane;
dividing the pulsed-wave radiation pattern into a plurality of sectors arranged in an array, and obtaining signal strength differences between each sector and adjacent sectors in a plurality of directions;
accumulating the signal strength differences of all sectors in the pulsed-wave radiation pattern in the plurality of directions;
assigning respective weighting coefficients to angles corresponding to the plurality of directions according to an accumulated sum of the signal strength differences in the plurality of directions; and
calculating a sum of products between the angles corresponding to respective directions and corresponding weighting coefficients as the core pulse direction.

7. The method according to claim 6, wherein the plurality of directions comprise a horizontal direction, a vertical direction, and two bisecting directions between the horizontal and vertical directions.

8. The method according to claims 6 or 7, wherein the reference plane is one or more planes selected from the group consisting of:
a plane where a radiating element of the UWB antenna is disposed; and
a plane passing through a center of the master device and a center of the UWB antenna.

9. An electronic device, comprising:
a memory, configured to store a communication program; and
a processor, configured to execute the communication program to perform the point-to-point communication method based on UWB technology according to any one of claims 1-8.

10. A storage medium, configured to store computer program executed by a processor to perform the point-to-point communication method based on UWB technology according to any one of claims 1-8.
